# FASCICULE DE BREVET EUROPEEN

(11) **EP 3 843 263 B1**
(45) Date de publication et mention de la délivrance du brevet: **21.06.2023**
(21) Numéro de dépôt: 20216500.7
(22) Date de dépôt: 22.12.2020
(51) Int. Cl.: H02P 29/62, H02P 23/14

(54) **SYSTÈME DE MOTORISATION ÉLECTRIQUE AVEC UNE FONCTION DE PRÉCHAUFFAGE POUR UNE PROTECTION DE SON MOTEUR CONTRE LA CONDENSATION**
ELEKTROANTRIEBSSYSTEM MIT VORWÄRMFUNKTION ZUM SCHUTZ SEINES MOTORS VOR KONDENSATION
ELECTRIC DRIVE SYSTEM WITH A PREHEATING FUNCTION FOR PROTECTING THE MOTOR THEREOF AGAINST CONDENSATION

(30) Priorité: 27.12.2019 FR 1915655
(43) Date de publication de la demande: 30.06.2021
(73) Titulaire: Manitowoc Crane Group France, 69570 Dardilly (FR)
(72) Inventeur: LARGY, Frédéric, 01400 SAINT GEORGES SUR RENON (FR)
(74) Mandataire: Germain Maureau

(56) Documents cités:
- EP-A2- 2 869 745
- CN-A- 103 539 024
- FR-A- 1 191 952
- FR-A- 1 544 012
- US-A- 5 896 021
- US-A1- 2017 214 346

## Description

L'invention se rapporte à un système de motorisation électrique, ainsi qu'à un procédé de protection contre la condensation dans un système de motorisation électrique.

Elle se rapporte plus particulièrement à un système de motorisation électrique, comprenant un moteur muni d'un ensemble rotor et stator incluant plusieurs bobines, où le moteur est piloté en vitesse de rotation par un variateur de fréquence alimenté électriquement par une alimentation électrique afin d'alimenter les bobines en courant électrique de fréquence variable, ce variateur de fréquence étant commandé par une unité de contrôle/commande pour une mise en service du moteur dans un mode de fonctionnement à vitesse variable, ou pour une mise hors service du moteur.

L'invention trouve une application favorite, et non limitative, dans les systèmes de motorisation électrique employés dans les grues de levage.

Dans une grue de levage, les moteurs électriques employés pour les manoeuvres (levage, orientation, distribution, ...) sont en extérieur et sont donc soumis aux variations climatiques, qui sont l'ensoleillement, l'humidité, la pluie, la condensation, le vent, la neige, le givre, ... Aussi, les moteurs électriques disposent généralement de capots ou de carters les protégeant plus ou moins de l'environnement climatique.

Cependant, il est difficile de lutter contre l'humidité qui provient de la condensation de l'eau contenu dans l'air ambiant, et une telle humidité a un impact sur la partie mécanique du moteur (carter, roulements, tôles magnétiques, ...) par oxydation ou corrosion, et également sur la partie électrique (bobines, ...) par une diminution de l'isolement.

Afin de prolonger la durée de vie de ces moteurs, il est donc nécessaire d'évacuer l'humidité présente dans le moteur par condensation de la vapeur d'eau contenue dans l'air sur les surfaces. Pour cela, il est connu de chauffer le moteur lorsque ce dernier est hors service, et à ce titre plusieurs solutions sont connues.

Une première solution consiste à ajouter une résistance chauffante spécifique sur les bobines du moteur, et une seconde solution consiste à alimenter électriquement les bobines du moteur au moyen d'un équipement supplémentaire (tel qu'un transformateur) qui vient en complément du variateur de fréquence.

Ces solutions imposent donc l'ajout de composants électriques (soit à l'intérieur du moteur, soit à l'extérieur, au niveau de l'armoire électrique par exemple), ce qui implique une augmentation du prix du système de motorisation électrique, une diminution de sa fiabilité et un encombrement accru du fait de cet ajout d'un composant.

L'état de la technique peut également être illustré par les enseignements du document US5896021 qui divulgue le préambule de la revendication 1, ainsi que les enseignements du document CN 103 539 024 qui divulgue un système motorisé dans une grue avec variateur de fréquence, et aussi avec frein moteur intégré.

Ainsi, l'invention définie dans les revendications indépendantes 1 et 10 jointes, propose un système de motorisation électrique, comprenant une unité motorisée équipée d'un moteur muni d'un ensemble rotor et stator incluant plusieurs bobines, et d'un variateur de fréquence alimenté électriquement par une alimentation électrique, ce moteur étant piloté en vitesse de rotation par le variateur de fréquence qui alimente ses bobines en courant électrique de fréquence variable, ce variateur de fréquence étant commandé par une unité de contrôle/commande pour une mise en service du moteur dans un mode de fonctionnement à vitesse variable, ou pour une mise hors service du moteur, ce système de motorisation électrique étant remarquable en ce que :
- il comprend en outre un système de mesure propre à mesurer au moins un paramètre de condensation représentatif d'une condensation de l'eau contenu dans un air ambiant, et
- l'unité de contrôle/commande est raccordée à ce système de mesure et est conformée pour, en fonction de ce paramètre de condensation, commander le variateur de fréquence durant la mise hors service du moteur afin qu'un courant électrique de préchauffage circule dans les bobines pour activer un préchauffage du moteur lorsqu'il est hors service.

Le système de mesure peut être placé dans un environnement plus ou moins proche du moteur, et par exemple dans un endroit à l'abri du rayonnement solaire et des intempéries telles que la pluie et la neige.

Le but de l'invention est que le mode de préchauffage, qui est activé par l'unité de contrôle/commande lorsque le moteur est hors service, conduit certes à une alimentation des bobines avec un courant électrique, en l'occurrence le courant électrique de préchauffage, sans pour autant faire tourner le moteur qui reste bien hors service.

Dans une première réalisation selon l'invention, l'unité motorisée comprend un frein moteur configurable entre une configuration ouverte lors de la mise en service du moteur pour autoriser une rotation du moteur, et une configuration fermée bloquant la rotation du moteur lorsque le moteur est hors service, que le préchauffage soit activé ou pas.

Ainsi, le moteur, candidat à la fonction de préchauffage conditionnée, comporte ce frein moteur qui va être ouvert lorsqu'un mouvement de moteur est commandé dans le mode en service. Dans le mode de préchauffage, ce même frein moteur n'est pas commandé, et reste donc fermé, empêchant tout mouvement de rotation du moteur, et ce même en présence du courant électrique de préchauffage.

Il est envisageable que l'unité de contrôle/commande soit raccordée audit frein moteur pour commander le frein moteur dans la configuration ouverte lors de la mise en service du moteur, et dans la configuration fermée lorsque le moteur est hors service, que le préchauffage soit activé ou pas.

Selon une caractéristique, le courant électrique de préchauffage est de moindre valeur comparativement au courant électrique de fréquence variable lors de la mise en service du moteur.

Selon une possibilité, le système de mesure comprend un appareil de mesure de température propre à mesurer une température de l'air ambiant, ladite température constituant ainsi un paramètre de condensation, et l'unité de contrôle/commande est conformée pour mettre en oeuvre le préchauffage du moteur lorsque la température est inférieure ou égale à une température de rosée.

La température de rosée est la température sous laquelle de la rosée se dépose naturellement, autrement dit sous laquelle l'eau (ou la vapeur d'eau) présente dans l'air ambiant se condense (se liquéfie) pour former des gouttelettes d'eau se déposant sur les composants du moteur. Ainsi, l'unité de contrôle/commande déclenche automatiquement le préchauffage lorsque la température ambiante atteint ou passe en-dessous de cette température de rosée, contribuant ainsi à réchauffer l'intérieur du moteur et donc à éviter la condensation.

Selon une autre possibilité, le système de mesure comprend un appareil de mesure de pression propre à mesurer une pression de l'air ambiant, ladite pression constituant ainsi un paramètre de condensation, et l'unité de contrôle/commande est conformée pour mettre en oeuvre le préchauffage du moteur lorsque la pression est supérieure ou égale à une pression de vapeur saturante.

La pression de vapeur saturante est la pression au-dessus de laquelle l'eau (ou la vapeur d'eau) présente dans l'air ambiant se condense pour former des gouttelettes d'eau se déposant sur les composants du moteur. Ainsi, l'unité de contrôle/commande déclenche automatiquement le préchauffage lorsque la pression ambiante atteint ou passe au-dessus de cette pression de vapeur saturante, contribuant ainsi à réchauffer l'intérieur du moteur et donc à éviter la condensation.

Selon une autre possibilité, le système de mesure comprend un appareil de mesure d'humidité propre à mesurer un taux d'humidité dans l'air ambiant, ledit taux d'humidité constituant ainsi un paramètre de condensation, et l'unité de contrôle/commande est conformée pour mettre en oeuvre le préchauffage du moteur lorsque le taux d'humidité est supérieur ou égal à un seuil prédéfini

Dans une réalisation particulière, l'unité de contrôle/commande est conformée pour stopper le préchauffage du moteur lors de la mise en service du moteur.

Ainsi, une fois que le moteur est mis en service, pour effectuer une manoeuvre (par exemple une manoeuvre de grue), le préchauffage est arrêté automatiquement, car du courant électrique circule dans les bobines pour faire tourner le moteur, et donc nécessairement un chauffage est obtenu au sein du moteur.

Avantageusement, l'unité de contrôle/commande calcule une valeur du courant électrique de préchauffage en fonction du ou des paramètres de condensation et en fonction de paramètres caractéristiques des bobines.

Autrement dit, selon les bobines (dimensions, matériaux, nombre), l'unité de contrôle/commande détermine la valeur du courant électrique de préchauffage qui sera adaptée pour un préchauffage suffisant afin d'éviter une condensation.

L'invention se rapporte également à une grue de levage comprenant au moins un système de motorisation électrique selon l'invention, l'unité motorisée dudit système de motorisation électrique étant reliée à au moins un organe mobile de la grue de levage pour actionner son déplacement et assurer une manoeuvre de grue lorsque le moteur est en service.

Dans un mode de réalisation particulier, la grue de levage comprend plusieurs unités motorisées reliées à des organes mobiles respectifs de la grue de levage pour actionner leurs déplacements respectifs et assurer des manoeuvres de grue respectives, et l'unité de contrôle/commande est commune à l'ensemble des unités motorisées.

Ainsi, l'unité de contrôle/commande peut être constituée d'un système de contrôle/commande commun à l'ensemble de ces unités motorisées, mais également conformé pour piloter l'ensemble des opérations de la grue.

L'invention concerne aussi un procédé de protection contre la condensation dans un moteur d'un système de motorisation électrique, dans lequel le système de motorisation électrique comprend une unité motorisée équipée du moteur muni d'un ensemble rotor et stator incluant plusieurs bobines, et d'un variateur de fréquence alimenté électriquement par une alimentation électrique, ce moteur étant piloté en vitesse de rotation par le variateur de fréquence qui alimente ses bobines en courant électrique de fréquence variable, ce variateur de fréquence étant commandé par une unité de contrôle/commande pour une mise en service du moteur dans un mode de fonctionnement à vitesse variable, ou pour une mise hors service du moteur, ce procédé de protection mettant en oeuvre les étapes suivantes :
- mesurer au moins un paramètre de condensation représentatif d'une condensation de l'eau contenu dans l'air ambiant ;
- commander au moyen de l'unité de contrôle/commande le variateur de fréquence en fonction dudit paramètre de condensation, durant la mise hors service du moteur, afin qu'un courant électrique de préchauffage circule dans les bobines pour un préchauffage du moteur lorsqu'il est hors service.

Dans une application avantageuse, le procédé de protection est mis en oeuvre pour un système de motorisation électrique d'une grue de levage, ledit système de motorisation électrique étant relié à au moins un organe mobile de ladite grue de levage pour actionner son déplacement et assurer une manoeuvre de grue lorsque le moteur est en service.

D'autres caractéristiques et avantages de la présente invention apparaîtront à la lecture de la description détaillée ci-après, d'un exemple de mise en oeuvre non limitatif, faite en référence aux figures annexées dans lesquelles :
[Fig 1] est une vue schématique d'un système de motorisation électrique selon l'invention ;
[Fig 2] est une vue schématique d'une grue de levage selon l'invention.

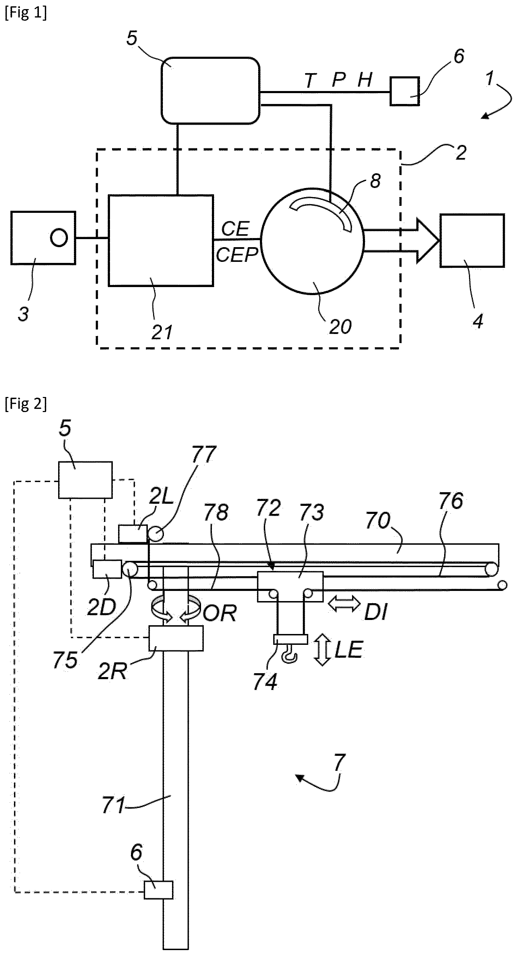

En référence à la Figure 1, un système de motorisation électrique 1 selon l'invention comprend une unité motorisée 2 équipée de :
- un moteur 20, de type moteur électrique rotatif, muni d'un ensemble rotor et stator incluant plusieurs bobines ;
- un variateur de fréquence 21 alimenté électriquement par une alimentation électrique 3 afin d'alimenter les bobines en courant électrique CE de fréquence variable de manière à piloter le moteur 20 en vitesse de rotation.

Le moteur 20 est accouplé en sortie à un organe mobile 4 pour assurer son déplacement ; la fonction de ce moteur 20 étant de déplacer cet organe mobile 4 à vitesse variable.

Il est à noter que l'alimentation électrique 3 peut être une alimentation électrique de secteur, ou bien une alimentation électrique autonome, comme par exemple un groupe électrogène ou une batterie.

Le système de motorisation électrique 1 comprend en outre une unité de contrôle/commande 5 qui commande le variateur de fréquence 21 pour :
- une mise en service du moteur 20 dans un mode de fonctionnement à vitesse variable, afin de déplacer l'organe mobile 4 à vitesse variable, ou
- une mise hors service du moteur 20 afin d'arrêter de déplacer l'organe mobile 4.

Cette unité motorisée 2 comprend en outre un frein moteur 8 configurable entre :
- une configuration ouverte lorsque le moteur 20 est en service pour autoriser une rotation du moteur 20, et
- une configuration fermée lorsque le moteur est hors service pour bloquer la rotation du moteur 20.

Selon l'invention, le système de motorisation électrique 1 comprend un système de mesure 6 propre à mesurer au moins un paramètre de condensation T, P, H représentatif d'une condensation de l'eau contenu dans l'air ambiant.

Ce système de mesure 6 peut comprendre l'un au moins des appareils de mesure suivants :
- un appareil de mesure de température propre à mesurer une température T de l'air ambiant, ladite température T constituant ainsi un paramètre de condensation ;
- un appareil de mesure de pression propre à mesurer une pression P de l'air ambiant, ladite pression P constituant ainsi un paramètre de condensation ;
- un appareil de mesure d'humidité propre à mesurer un taux d'humidité H dans l'air ambiant, ledit taux d'humidité H constituant ainsi un paramètre de condensation.

Tout ou partie des appareils de mesure peuvent être déportés, à plus ou moins grande distance, du moteur 20, du moment que leurs mesures sont représentatives de l'air environnant le moteur 20. Autrement dit, le système de mesure 6 peut être installé à l'extérieur du moteur 20. Il est possible également d'avoir tout ou partie des appareils de mesure dans le moteur 20, et en particulier sous le carter du moteur 20.

Par ailleurs, afin de remplir une fonction de préchauffage lorsque le moteur 20 est hors service afin de protéger le moteur 20 contre la condensation, l'unité de contrôle/commande 5 est raccordée au système de mesure 6 et est conformée pour, en fonction du ou des paramètres de condensation T, P, H, commander le variateur de fréquence 21 durant la mise hors service du moteur 20 afin qu'un courant électrique de préchauffage CEP circule dans les bobines pour un préchauffage du moteur 20 lorsqu'il est hors service.

Ce courant électrique de préchauffage CEP est de moindre valeur comparativement au courant électrique CE de fréquence variable qui circule dans les bobines lorsque le moteur 20 est en service, autrement lors de la mise en service du moteur 20. Bien entendu, lors de ce préchauffage en mode hors service du moteur 20, le frein moteur 8 est toujours en configuration fermée, de sorte que le moteur 20 ne peut typiquement pas tourner et ne peut donc pas déplacer l'organe mobile 4, quand bien même le courant électrique de préchauffage CEP circule dans les bobines.

Ainsi, dans le cas où la température T est un paramètre de condensation, l'unité de contrôle/commande 5 est conformée pour mettre en oeuvre le préchauffage du moteur 20 lorsque la température T est inférieure ou égale à une température de rosée.

Dans le cas où la pression P est un paramètre de condensation, l'unité de contrôle/commande 5 est conformée pour mettre en oeuvre le préchauffage du moteur 20 lorsque la pression P est supérieure ou égale à une pression de vapeur saturante.

Dans le cas où le taux d'humidité H est un paramètre de condensation, l'unité de contrôle/commande 5 est conformée pour mettre en oeuvre le préchauffage du moteur 20 lorsque le taux d'humidité H est supérieur ou égal à un seuil prédéfini.

Par ailleurs, l'unité de contrôle/commande 5 est conformée pour stopper automatiquement le préchauffage du moteur 20 lors de la mise en service du moteur 20, autrement dit lorsque le moteur 20 est mis en service afin de déplacer l'organe mobile 4 à vitesse variable.

L'invention trouve une application favorite, et non limitative, dans une grue de levage 7 schématisée en Figure 2, qui comprend une flèche 70 distributrice montée sur une tour 71 (aussi appelée mât) ; étant noté que l'invention peut être appliquée avec d'autres types de grue comme par exemple des grues à montage automatisée, des grues dépliables, des grues à flèche relevable, ou des grues mobiles.

La flèche 70 peut être montée rotative sur la tour 3 selon un axe vertical et cette grue de levage 7 peut comprendre une unité motorisée 2R qui actionne le déplacement de la flèche 70 en rotation selon cet axe vertical et ainsi assurer une manoeuvre d'orientation de la flèche 70 schématisée par la flèche OR.

La grue de levage 7 comporte en outre un dispositif de levage 72 pour distribuer une charge (non illustrée) le long de la flèche 70. Ce dispositif de levage 72 comprend un chariot distributeur 73 roulant le long de la flèche 70 et supportant un organe de levage 74 prévu pour un accrochage de la charge et pouvant se présenter sous la forme d'un crochet.

La grue de levage 7 peut ainsi comprendre une unité motorisée 2D qui actionne le déplacement du dispositif de levage 72, et en particulier le déplacement du chariot distributeur 73, le long de la flèche 70 et ainsi assurer une manoeuvre de distribution de la charge schématisée par la flèche DI. Ce système motorisé 2D peut avoir son moteur qui entraîne un treuil de distribution 75 muni d'un tambour de distribution accouplé à un câble de distribution 76 ayant des brins fixés de part et d'autre du chariot distributeur 73.

La grue de levage 7 peut également comprendre une unité motorisée 2L qui actionne le déplacement de l'organe de levage 74 en montée et en descente, et ainsi assurer une manoeuvre de levage de la charge schématisée par la flèche LE. Ce système motorisé 2L peut avoir son moteur qui entraîne un treuil de levage 77 muni d'un tambour de levage accouplé à un câble de levage 78 sur lequel est suspendu l'organe de levage 74.

Dans une application non illustrée, la grue de levage peut comprendre une centrale hydraulique intégrant une pompe hydraulique entraînée par un moteur d'une unité motorisée selon l'invention, par exemple pour actionner un vérin hydraulique.

Les unités motorisées 2R, 2D, 2L sont toutes équipées d'un moteur et d'un variateur de fréquence, comme précédemment décrit en référence à la Figure 1. Dans cette grue de levage 7, l'unité de contrôle/commande 5 peut être commune à l'ensemble des unités motorisées 2R, 2D, 2L qui équipent la grue de levage 7.

De même, le système de mesure 6 peut être commun à l'ensemble des unités motorisées 2R, 2D, 2L qui équipent la grue de levage 7, comme illustré sur la Figure 2. Ce système de mesure 6 peut par exemple être localisé au pied de la tour 71, et par exemple sous une armoire électrique de commande (non illustré), à l'abri du rayonnement solaire et de la pluie.

L'unité de contrôle/commande 5 est donc reliée aux variateurs de fréquence des unités motorisées 2R, 2D, 2L, afin de déclencher le préchauffage dans tout ou partie de ses unités motorisées 2R, 2D, 2L en fonction du ou des paramètres de condensation T, P, H.

Si toutes les unités motorisées 2R, 2D, 2L sont hors service, alors l'unité de contrôle/commande 5 déclenche le préchauffage dans toutes les unités motorisées 2R, 2D, 2L. Si au moins une unité motorisée est hors service tandis qu'au moins une autre unité motorisée est en service, alors l'unité de contrôle/commande 5 déclenche le préchauffage uniquement dans la ou les unités motorisées qui sont hors service.

## Revendications

1. Système de motorisation électrique (1), comprenant une unité motorisée (2) équipée d'un moteur (20) muni d'un ensemble rotor et stator incluant plusieurs bobines, et d'un variateur de fréquence (21) alimenté électriquement par une alimentation électrique (3), ledit moteur (20) étant piloté en vitesse de rotation par le variateur de fréquence (21) qui alimente ses bobines en courant électrique de fréquence variable, ledit variateur de fréquence (21) étant commandé par une unité de contrôle/commande (5) pour une mise en service du moteur (20) dans un mode de fonctionnement à vitesse variable, ou pour une mise hors service du moteur (20), ledit système de motorisation électrique (1) comprenant en outre un système de mesure (6) propre à mesurer au moins un paramètre de condensation (T; P; H) représentatif d'une condensation de l'eau contenu dans un air ambiant, et en ce que l'unité de contrôle/commande (5) est raccordée audit système de mesure (6) et est conformée pour, en fonction dudit paramètre de condensation (T; P; H), commander le variateur de fréquence (21) durant la mise hors service du moteur (20) afin qu'un courant électrique de préchauffage (CEP) circule dans les bobines pour activer un préchauffage du moteur (20) lorsqu'il est hors service, ledit système de motorisation électrique (1) étant **caractérisé en ce que** l'unité motorisée (2) comprend un frein moteur (8) configurable entre une configuration ouverte lors de la mise en service du moteur (20) pour autoriser une rotation du moteur (20) et une configuration fermée bloquant la rotation du moteur (20) lorsque le moteur (20) est hors service, que le préchauffage soit activé ou pas.

2. Système de motorisation électrique (1) selon la revendication 1, dans lequel le courant électrique de préchauffage (CEP) est de moindre valeur comparativement au courant électrique (CE) de fréquence variable lors de la mise en service du moteur (20).

3. Système de motorisation électrique (1) selon l'une quelconque des revendications 1 et 2, dans lequel le système de mesure (6) comprend un appareil de mesure de température propre à mesurer une température (T) de l'air ambiant, ladite température (T) constituant ainsi un paramètre de condensation, et l'unité de contrôle/commande (5) est conformée pour mettre en oeuvre le préchauffage du moteur (20) lorsque la température (T) est inférieure ou égale à une température de rosée.

4. Système de motorisation électrique (1) selon l'une quelconque des revendications 1 à 3, dans lequel le système de mesure (6) comprend un appareil de mesure de pression propre à mesurer une pression (P) de l'air ambiant, ladite pression (P) constituant ainsi un paramètre de condensation, et l'unité de contrôle/commande (5) est conformée pour mettre en oeuvre le préchauffage du moteur (20) lorsque la pression (P) est supérieure ou égale à une pression de vapeur saturante.

5. Système de motorisation électrique (1) selon l'une quelconque des revendications 1 à 4, dans lequel le système de mesure (6) comprend un appareil de mesure d'humidité propre à mesurer un taux d'humidité (H) dans l'air ambiant, ledit taux d'humidité (H) constituant ainsi un paramètre de condensation, et l'unité de contrôle/commande (5) est conformée pour mettre en oeuvre le préchauffage du moteur (20) lorsque le taux d'humidité (H) est supérieur ou égal à un seuil prédéfini.

6. Système de motorisation électrique (1) selon l'une quelconque des revendications 1 à 5, dans lequel l'unité de contrôle/commande (5) est conformée pour stopper le préchauffage du moteur (20) lors de la mise en service du moteur (20).

7. Système de motorisation électrique (1) selon l'une quelconque des revendications 1 à 6, dans lequel l'unité de contrôle/commande (5) calcule une valeur du courant électrique de préchauffage (CEP) en fonction du ou des paramètres de condensation (T; P; H) et en fonction de paramètres caractéristiques des bobines.

8. Grue de levage (7) comprenant au moins un système de motorisation électrique selon l'une quelconque des revendications 1 à 7, l'unité motorisée (2R ; 2D ; 2L) dudit système de motorisation électrique étant reliée à au moins un organe mobile (70 ; 73 ; 74) de ladite grue de levage (7) pour actionner son déplacement et assurer une manoeuvre de grue (OR ; DI ; LE) lorsque le moteur (20) est en service.

9. Grue de levage (7) selon la revendication 8, comprenant plusieurs unités motorisées (2R, 2D, 2L) reliées à des organes mobiles (70, 73, 74) respectifs de ladite grue de levage (7) pour actionner leurs déplacements respectifs et assurer des manoeuvres de grue (OR, DI, LE) respectives, et dans laquelle l'unité de contrôle/commande (5) est commune à l'ensemble des unités motorisées (2R, 2D, 2L).

10. Procédé de protection contre la condensation dans un moteur (20) d'un système de motorisation électrique (1), dans lequel le système de motorisation électrique (1) comprend une unité motorisée (2) équipée du moteur (20) muni d'un ensemble rotor et stator incluant plusieurs bobines, et d'un variateur de fréquence (21) alimenté électriquement par une alimentation électrique (3), ledit moteur (20) étant piloté en vitesse de rotation par le variateur de fréquence (21) qui alimente ses bobines en courant électrique de fréquence variable, ledit variateur de fréquence (21) étant commandé par une unité de contrôle/commande (5) pour une mise en service du moteur (20) dans un mode de fonctionnement à vitesse variable, ou pour une mise hors service du moteur (20),
ledit procédé de protection mettant en oeuvre les étapes suivantes :
- mesurer au moins un paramètre de condensation (T; P; H) représentatif d'une condensation de l'eau contenu dans l'air ambiant ;
- commander au moyen de l'unité de contrôle/commande (5) le variateur de fréquence (21) en fonction dudit paramètre de condensation (T; P; H), durant la mise hors service du moteur (20), afin qu'un courant électrique de préchauffage (CEP) circule dans les bobines pour un préchauffage du moteur (20) lorsqu'il est hors service ;
ledit procédé de protection étant caractérisé en que l'unité motorisée (2) comprend un frein moteur (8) raccordé à l'unité de contrôle/commande (5) et configurable entre une configuration ouverte lors de la mise en service du moteur (20) pour autoriser une rotation du moteur (20) et une configuration fermée bloquant la rotation du moteur (20) lorsque le moteur (20) est hors service, et en ce que ledit procédé de protection met également en oeuvre une étape qui consiste à commander au moyen de l'unité de contrôle/commande (5) le frein moteur (8) dans la configuration ouverte lors de la mise en service du moteur (20) , et dans la configuration fermée lorsque le moteur (20) est hors service, que le préchauffage soit activé ou pas.

11. Procédé de protection selon la revendication 10, dans lequel le procédé de protection est mis en oeuvre pour un système de motorisation électrique (1) d'une grue de levage (7), ledit système de motorisation électrique (1) étant relié à au moins un organe mobile de ladite grue de levage (7) pour actionner son déplacement et assurer une manoeuvre de grue lorsque le moteur (20) est en service.

## Patentansprüche

1. Elektroantriebssystem (1), eine motorisierte Einheit (2) umfassend, die mit einem Motor (20) ausgerüstet ist, der mit einer Rotor- und Statoranordnung ausgestattet ist, die mehrere Spulen einschließt, und mit einem Frequenzumrichter (21), der von einer Stromversorgung (3) elektrisch versorgt wird, wobei der Motor (20) drehzahlgesteuert wird vom Frequenzumrichter (21), der seine Spulen mit elektrischem Strom veränderbarer Frequenz versorgt, wobei der Frequenzumrichter (21) von einer Bedien-/Steuereinheit (5) zur Inbetriebnahme des Motors (20) in einem Betriebsmodus mit veränderbarer Drehzahl gesteuert wird, oder für eine Außerbetriebnahme des Motors (20), wobei das Elektroantriebssystem (1) ferner ein eigenes Messsystem (6) umfasst zum Messen mindestens eines Kondensationsparameters (T; P; H), der für eine Kondensation des Wassers repräsentativ ist, das in einer Umgebungsluft enthalten ist, und dass die Bedien-/Steuereinheit (5) mit dem Messsystem (6) verbunden ist und angepasst ist, um, in Abhängigkeit des Kondensationsparameters (T; P; H), den Frequenzumrichter (21) während der Außerbetriebnahme des Motors (20) so zu steuern, dass ein elektrischer Vorwärmstrom (CEP) durch die Spulen fließt, um ein Vorwärmen des Motors (20) zu aktivieren, wenn dieser außer Betrieb ist, wobei das Elektroantriebssystem (1) **dadurch gekennzeichnet ist, dass** die motorisierte Einheit (2) eine Motorbremse (8) umfasst, die konfigurierbar ist zwischen einer offenen Konfiguration während der Inbetriebnahme des Motors (20), um eine Drehung des Motors (20) zu ermöglichen, und einer geschlossenen Konfiguration, die die Drehung des Motors (20) blockiert, wenn der Motor (20) außer Betrieb ist, unabhängig davon, ob das Vorwärmen aktiviert ist oder nicht.

2. Elektroantriebssystem (1) nach Anspruch 1, wobei der elektrische Vorwärmstrom (CEP) im Vergleich zum elektrischen Strom (CE) veränderbarer Frequenz bei Inbetriebnahme des Motors (20) von geringerem Wert ist.

3. Elektroantriebssystem (1) nach einem der Ansprüche 1 und 2, wobei das Messsystem (6) ein eigenes Temperaturmessgerät zum Messen einer Temperatur (T) der Umgebungsluft umfasst, wobei die Temperatur (T) somit einen Kondensationsparameter darstellt, und die Bedien-/Steuereinheit (5) angepasst ist, um das Vorwärmen des Motors (20) durchzuführen, wenn die Temperatur (T) kleiner oder gleich einer Taupunkttemperatur ist.

4. Elektroantriebssystem (1) nach einem der Ansprüche 1 bis 3, wobei das Messsystem (6) ein eigenes Druckmessgerät zum Messen eines Drucks (P) der Umgebungsluft umfasst, wobei der Druck (P) somit einen Kondensationsparameter darstellt, und die Bedien-/Steuereinheit (5) angepasst ist, um das Vorwärmen des Motors (20) durchzuführen, wenn der Druck (P) größer oder gleich einem Sättigungsdampfdruck ist.

5. Elektroantriebssystem (1) nach einem der Ansprüche 1 bis 4, wobei das Messsystem (6) ein eigenes Feuchtigkeitsmessgerät zur Messung eines Feuchtigkeitsgehalts (H) in der Umgebungsluft umfasst, wobei der Feuchtigkeitsgehalt (H) somit einen Kondensationsparameter darstellt, und die Bedien-/Steuereinheit (5) angepasst ist, um das Vorwärmen des Motors (20) durchzuführen, wenn der Feuchtigkeitsgehalt (H) größer oder gleich einem vordefinierten Schwellenwert ist.

6. Elektroantriebssystem (1) nach einem der Ansprüche 1 bis 5, wobei die Bedien-/Steuereinheit (5) angepasst ist, um das Vorwärmen des Motors (20) während der Inbetriebnahme des Motors (20) zu stoppen.

7. Elektroantriebssystem (1) nach einem der Ansprüche 1 bis 6, wobei die Bedien-/Steuereinheit (5) einen Wert des elektrischen Vorwärmstroms (CEP) in Abhängigkeit von dem oder den Kondensationsparametern (T; P; H) berechnet, und in Abhängigkeit von den für die Spulen charakteristischen Parametern.

8. Hebekran (7), mindestens ein Elektroantriebssystem nach einem der Ansprüche 1 bis 7 umfassend, wobei die motorisierte Einheit (2R; 2D; 2L) des Elektroantriebssystems mit mindestens einem beweglichen Element (70; 73; 74) des Hebekrans (7) verbunden ist, um seine Verschiebung zu betätigen und ein Kranmanöver (OR; DI; LE) zu gewährleisten, wenn der Motor (20) in Betrieb ist.

9. Hebekran (7) nach Anspruch 8, mehrere motorisierte Einheiten (2R, 2D, 2L) umfassend, die mit den jeweiligen beweglichen Elementen (70, 73, 74) des Hebekrans (7) verbunden sind, um ihre jeweiligen Verschiebungen zu betätigen und jeweilige Kranmanöver (OR, DI, LE) zu gewährleisten, wobei die Bedien-/Steuereinheit (5) allen motorisierten Einheiten (2R, 2D, 2L) gemeinsam ist.

10. Kondensationsschutzverfahren in einem Motor (20) eines Elektroantriebssystems (1), wobei das Elektroantriebssystem (1) eine motorisierte Einheit (2) umfasst, die mit dem Motor (20) ausgerüstet ist, der mit einer Rotor- und Statoranordnung ausgestattet ist, die mehrere Spulen einschließt, und mit einem Frequenzumrichter (21), der von einer Stromversorgung (3) elektrisch versorgt wird, wobei der Motor (20) drehzahlgesteuert wird vom Frequenzumrichter (21), der seine Spulen mit elektrischem Strom veränderbarer Frequenz versorgt, wobei der Frequenzumrichter (21) von einer Bedien-/Steuereinheit (5) zur Inbetriebnahme des Motors (20) in einem Betriebsmodus mit veränderbarer Drehzahl gesteuert wird, oder für eine Außerbetriebnahme des Motors (20),
wobei das Schutzverfahren die folgenden Schritte durchführt:
- Messen von mindestens einem Kondensationsparameter (T; P; H), der für eine Kondensation des Wassers in der Umgebungsluft repräsentativ ist;
- Steuern, über die Bedien-/Steuereinheit (5), des Frequenzumrichters (21) in Abhängigkeit des Kondensationsparameters (T; P; H) während der Außerbetriebnahme des Motors (20), so dass ein elektrischer Vorwärmstrom (CEP) durch die Spulen fließt, um den Motor (20) vorzuwärmen, wenn er außer Betrieb ist;
wobei das Schutzverfahren **dadurch gekennzeichnet ist, dass** die motorisierte Einheit (2) eine mit der Bedien-/Steuereinheit (5) verbundene Motorbremse (8) umfasst, die konfigurierbar ist zwischen einer offenen Konfiguration während der Inbetriebnahme des Motors (20), um eine Drehung des Motors (20) zu ermöglichen, und einer geschlossenen Konfiguration, die die Drehung des Motors (20) blockiert, wenn der Motor (20) außer Betrieb ist, und wobei das Schutzverfahren auch einen Schritt durchführt, der darin besteht, über die Bedien-/Steuereinheit (5) die Motorbremse (8) in der offenen Konfiguration während der Inbetriebnahme des Motors (20) zu steuern und in der geschlossenen Konfiguration wenn der Motor (20) außer Betrieb ist, unabhängig davon, ob das Vorwärmen aktiviert ist oder nicht.

11. Schutzverfahren nach Anspruch 10, wobei das Schutzverfahren für ein Elektroantriebssystem (1) eines Hebekrans (7) durchgeführt wird, wobei das Elektroantriebssystem (1) mit mindestens einem beweglichen Element des Hebekrans (7) verbunden ist, um seine Verschiebung zu betätigen und ein Kranmanöver zu gewährleisten, wenn der Motor (20) in Betrieb ist.

## Claims

1. An electric motorization system (1), comprising a motorized unit (2) equipped with a motor (20) provided with a rotor and stator assembly including several coils, and a frequency converter (21) which is electrically powered by a power supply (3), said motor (20) being driven in rotational speed by the frequency converter (21) which powers the coils thereof with a variable frequency electric current, said frequency converter (21) being controlled by a monitoring/control unit (5) for turning on the motor (20) in a variable speed operating mode, or for turning off the motor (20), said electric motorization system (1) comprising a measurement system (6) suitable for measuring at least one condensation parameter (T; P; H) which is representative of a condensation of the water contained in an ambient air, and in that the monitoring/control unit (5) is connected to said measurement system (6) and is designed to, depending on said condensation parameter (T; P; H), control the frequency converter (21) during the turning off of the motor (20) so that a preheating electric current (CEP) flows through the coils to activate a preheating of the motor (20) when it is turned off, said electric motorization system (1) being **characterized in that** the motorized unit (2) comprises a motor brake (8) which is configurable between an open configuration during the turning on of the motor (20) to enable a rotation of the motor (20) and a closed configuration blocking the rotation of the motor (20) when the motor (20) is turned off, whether or not the preheating is activated.

2. The electric motorization system (1) according to claim 1, wherein the preheating electric current (CEP) is of lower value compared to the variable frequency electric current (CE) during the turning on of the motor (20).

3. The electric motorization system (1) according to any one of claims 1 and 2, wherein the measurement system (6) comprises a temperature measuring apparatus suitable for measuring a temperature (T) of the ambient air, said temperature (T) thus constituting a condensation parameter, and the monitoring/control unit (5) is designed to implement the preheating of the motor (20) when the temperature (T) is less than or equal to a dew point temperature.

4. The electric motorization system (1) according to any one of claims 1 to 3, wherein the measurement system (6) comprises a pressure measuring apparatus suitable for measuring a pressure (P) of the ambient air, said pressure (P) thus constituting a condensation parameter, and the monitoring/control unit (5) is designed to implement the preheating of the motor (20) when the pressure (P) is greater than or equal to a saturated vapor pressure.

5. The electric motorization system (1) according to any one of claims 1 to 4, wherein the measurement system (6) comprises a humidity measuring apparatus suitable for measuring a humidity content (H) in the ambient air, said humidity content (H) thus constituting a condensation parameter, and the monitoring/control unit (5) is designed to implement the preheating of the motor (20) when the humidity content (H) is greater than or equal to a predefined threshold.

6. The electric motorization system (1) according to any one of claims 1 to 5, wherein the monitoring/control unit (5) is designed to stop the preheating of the motor (20) during the turning on of the motor (20).

7. The electric motorization system (1) according to any one of claims 1 to 6, wherein the monitoring/control unit (5) calculates a value of the preheating electric current (CEP) depending on the condensation parameter(s) (T; P; H) and depending on characteristic parameters of the coils.

8. A lifting crane (7) comprising at least one electric motorization system according to any one of claims 1 to 7, the motorized unit (2R; 2D; 2L) of said electric motorization system being connected to at least one movable member (70; 73; 74) of said lifting crane (7) to actuate its displacement and ensure a crane maneuver (OR; DI; LE) when the motor (20) is turned on.

9. The lifting crane (7) according to claim 8, comprising several motorized units (2R, 2D, 2L) connected to respective movable members (70, 73, 74) of said lifting crane (7) to actuate their respective displacements and ensure respective crane maneuvers (OR, DI, LE), and in which the monitoring/control unit (5) is common to all motorized units (2R, 2D, 2L).

10. A method for protecting against the condensation in a motor (20) of an electric motorization system (1), wherein the electric motorization system (1) comprises a motorized unit (2) equipped with the motor (20) provided with a rotor and stator assembly including several coils, and a frequency converter (21) which is electrically powered by a power supply (3), said motor (20) being driven in rotational speed by the frequency converter (21) which powers the coils thereof with a variable frequency electric current, said frequency converter (21) being controlled by a monitoring/control unit (5) for turning on the motor (20) in a variable speed operating mode, or for turning off the motor (20),
said protection method implementing the following steps:
- measuring at least one condensation parameter (T; P; H) which is representative of a condensation of the water contained in the ambient air;
- controlling, by means of the monitoring/control unit (5), the frequency converter (21) depending on said condensation parameter (T; P; H), during the turning off of the motor (20), so that a preheating electric current (CEP) flows through the coils for a preheating of the motor (20) when it is turned off; said protection method being **characterized in that** the motorized unit (2) comprises a motor brake (8) which is connected to the monitoring/control unit (5) and configurable between an open configuration during the turning on of the motor (20) to enable a rotation of the motor (20) and a closed configuration blocking the rotation of the motor (20) when the motor (20) is turned off, and **in that** said protection method also implements a step consisting in controlling, by means of the monitoring/control unit (5), the motor brake (8) in the open configuration during the turning on of the motor (20), and in the closed configuration when the motor (20) is turned off, whether or not the preheating is activated.

11. The protection method according to claim 10, wherein the protection method is implemented for an electric motorization system (1) of a lifting crane (7), said electric motorization system (1) being connected to at least one movable member of said lifting crane (7) to actuate its displacement and ensure a crane maneuver when the motor (20) is turned on.
